# EUROPEAN PATENT SPECIFICATION

(11) **EP 1 210 857 B1**
(45) Date of publication and mention of the grant of the patent: **27.07.2005**
(21) Application number: 01500281.9
(22) Date of filing: 04.12.2001
(51) Int. Cl.: A01D 46/26

(54) **Multidirectional vibrating clamp**
Schwingende, multidirektionale Backen
Mâchoire à vibration multidirectionnelle

(30) Priority: 04.12.2000 ES 200002907; 27.11.2001 ES 200102632
(43) Date of publication of application: 05.06.2002
(73) Proprietor: Agricola Noli, S.A., 14520 Fernan Nunez, Cordoba (ES)
(72) Inventor: Sanz Carros, Eduardo, 28016 Madrid (ES)
(74) Representative: Urizar Anasagasti, José Antonio

(56) References cited:
- EP-A- 0 938 839
- ES-A- 2 018 949
- GB-A- 2 274 968
- US-A- 3 248 865
- US-A- 3 460 329
- US-A- 4 128 986
- US-A- 5 123 238
- US-A- 5 489 008

## Description

### OBJECT OF THE INVENTION

The object of the present invention, as shown by the title of this description, is related to an innovative multidirectional vibrating clamp of the kind that is attached to a vehicle such as a tractor or the like, designed to facilitate tight clamping of tree trunks or branches and cause them to vibrate in any direction by way of the rotation of an inertial mass driven by a hydraulic motor, the eccentric inertial mass originating a variation of centrifugal strength that generates vibration at high rotation frequencies. The oiling system for the vibrating mass is carried out with drainage oil from the same motor, for which two oil entrance-exits are made, leading into an upper chamber which carries out oiling of all the upper parts of the system, bearings, retainers, etc.

As this chamber has a constant filling pressure, failure of the parts due to lack of oiling is avoided, since while they are working there is always constant consumption and loss of this liquid.

The opening and closing of the jaws is related to the gears in symmetric movement with respect to the central axis X-X between the clamps.

### BACKGROUND OF THE INVENTION

Harvesting fruit, and more specifically, harvesting olives and fruits of small, compact dimensions in rural areas, was traditionally carried out manually with poles for shaking the olive branches, making the mature fruit drop down to be collected subsequently.

The first inconvenience that is come across in large olive groves is that rapid harvesting is necessary in order to avoid loss of part of the crop due to its not having been harvested in time, and lesser inconveniences include the quality offered by crops that include batches that have been harvested too late.

Taking into account the traditional harvesting methods, and with the premise of faster harvesting, the possibility of using machines that make the trunk or branches of the trees vibrate strongly enough to simulate in the tree branches the same effect as a pole, but limiting said vibration to a preset magnitude to avoid breaking the branches and roots of the tree, was put forth. A practical embodiment of said idea has been effected by several inventors, gaining certain advantages over time.

Among the registrations carried out in relation to the subject of this patent is the Spanish patent P-8903838 (13-11-1989) by Ettablissements Pellenc et Motte, S.A. entitled "Machine and mechanical procedure for fruit harvesting by shaking", claiming a machine that used a shaking head that contained a clamp able to receive a back and forth shaking movement at high frequencies by an alternative elevator whose axis rod is connected to jaws of said clamp, using a servovalve as means of variation and adjustment of frequencies that generates vibration by distributing the injection fluid to the head.

The means used with the application of the aforementioned machine generated movements in axial direction with the head, so that the possibility of vibration in any other direction was eliminated, implicating a change of relative location of the cross vibration axis to the parent of the theoretical cylindrical body of the tree, with a longer collection time per tree, this solution thus being worse than the traditional method.

Other kinds of vibrators include those that use hydraulic motors to generate vibration, such as in the utility model U-9001341, 25-4-1990, application by Construcciones Agrícolas Buñuel S.A., entitled "Remote control robotic vibrator for harvesting hanging fruits", where a machine that consists of a structural body including means for connecting and hitching up to the back of a tractor is claimed, whose body includes two asynchronous hydraulic motors by which the vibration is created, while two arm extremities in prolongation of said body are articulated and faced by a clamp, activated by two hydraulic telescopic cylinders by whose arms the vibrator clasped the tree trunk.

In this type of inventions, which include two hydraulic motors, the previous inconvenience was solved since the asynchronous motors generated vibration in several random directions, functioning as a general trunk vibrator and by extension vibrating its branches and fruit, but a problem with a larger cost is derived from said arrangement, not with respect to the time that was wasted with the first patent mentioned by repeating the operation in several stages, but in the maintenance of the machinery being vibrated, since being asynchronous motors, the starting vibration, until it reached a permanent status, could in some cases reach values of strength over and above those determined by safety coefficients for the materials and joints of the machine, thus provoking various kinds of damage both to the machine and to the tree itself. This might happen if the motors start their rotation with maximal movement conditions between them, which would generate a very large inertia value due to the large mass moved by the vibration.

US Patent No. 5 123 238 discloses a fruit harvester which, by means of a clamp having two jaws articulated at a common point and driven by a transversal hydraulic cylinder, grips the trunk to be submitted to vibration to cause dropping and collecting of fruits by means of a rotary eccentric mass placed in one of the jaws. This vibrating assembly has the drawback that when the triangle defined by the jaws and the hydraulic cylinder is distorted because of vibration, the tree is submitted to shearing stresses between both jaws with opposite directions, which probably will produce damages on both bark and roots because of the rotation effected on the trunk. On the other hand, the eccentric mass consists of discs, which are not especially lubricated being this assembly submitted to hard stresses.

A machine corresponding to the preamble of claim 1 is also disclosed in the document ES-2136516.

The present invention offers some important innovations that eliminate the aforementioned problems, due both to its configuration and functionality and to the components that generate vibration, as well as an oiling system for the vibrating mass that uses the drainage oil from the motor itself.

### DESCRIPTION OF THE INVENTION

Multidirectional vibrating clamp, which is adaptable to a means of traction, normally a tractor or similar vehicle, for shaking and vibrating tree trunks, whose fruit are olives, almonds or the like.

This multidirectional vibrating clamp is composed in its configuration of two pieces or articulated jaws at one of its extremities by the gears that are at each of the jaw ends of the clamp and inside the base arm of the whole of the clamp. The ends opposite these are free, and can carry out an approaching radial movement with respect to one another by activating a main hydraulic cylinder, which is held at the free end of its body onto one of the jaws of the clamp, and by the other free end where the rod of said hydraulic cylinder is located, onto the other jaw of the clamp, the body of the cylinder being joined to the main piece that comes out of the base arm piece. On one of the jaws of the clamp the hydraulic motor is situated, fed by an external CENTRAL within the tractor, within this hydraulic motor a system that facilitates vibratory movement of the clamp in general is included, obtaining said vibration by the action of the rotating movement of the inertial mass situated in an extension of the rotating axis of the eccentric motor. This oiling system of the vibrating mass is carried out with drainage oil from the same motor, for which two oil (entrance-exits) are created, which lead to an upper chamber that carries out the oiling of all the upper parts of the system, bearings, retainers, etc.

Once this chamber is full, the extra oil is sent through a hole made in the central axis to a second, lower oiling chamber, which, just as the aforementioned one, carries out the lubrication of all the parts used, bearings, retainers, etc.

Since these chambers have constant filling pressure, the failure of the parts due to lack of oiling is avoided, since during their working there is always consumption and loss of this liquid.

Between one of the jaws of the clamp and the base arm where the two ends of the clamp are joined, where the gears are positioned, a main cylinder is situated and fixed at one of its ends to the base arm, and the rod that moves at its salient end is attached to the jaw of the clamp, facilitating the loosening of the appropriate gears when the jaws of the clamp are activated, thus reducing rubbing and the production of noise.

This clamp has an innovative design in the anchoring between the shuttle of the tractor and the vibrating floating clamp which facilitates mounting and dismounting, since the cylindrical shaped joining piece is sectioned lengthwise, with easy access, allowing for the tightening of the set's fastening screws.

These multidirectional vibrating clamps can be adapted and can clasp tree trunks of diameters of up to 350 mm. with 70 horsepower tractors, and diameters of up to 500 mm. with 100 horsepower tractors.

To complete the description and in order to facilitate a better understanding of the characteristics of the invention, the present description is accompanied by diagrams through whose figures the innovations and advantages of the protection object of the invention can be more easily understood.

### BRIEF DESCRIPTION OF THE ILLUSTRATIONS

Figure 1 shows a perspective view of the multidirectional vibrating clamp arrangement, attached to the lengthener that joins it to the tractor or similar vehicle, as well as the elastic damping support arrangement, which joins the rigid support on one side and on the other the machine or vibrating floating clamp.
Figure 2 shows a perspective view of the multidirectional vibrating clamp arrangement with all the elements that structurally define it.
Figure 3 shows the elastic damper support arrangement, in perspective with detailed projection, where all the elastic support elements appear, facilitating the attachment to the rigid support and to the machine or clamp.
Figure 4 shows the vibrating mass arrangement in perspective, as well as a lengthwise section where the location of all of its components are shown.
Figure 5 shows an overview of the set of jaws, where the location of the parts that make up the gears is shown and their position within the arrangement, as well as the support cylinder on the jaws.

### PREFERRED EMBODIMENT OF THE INVENTION

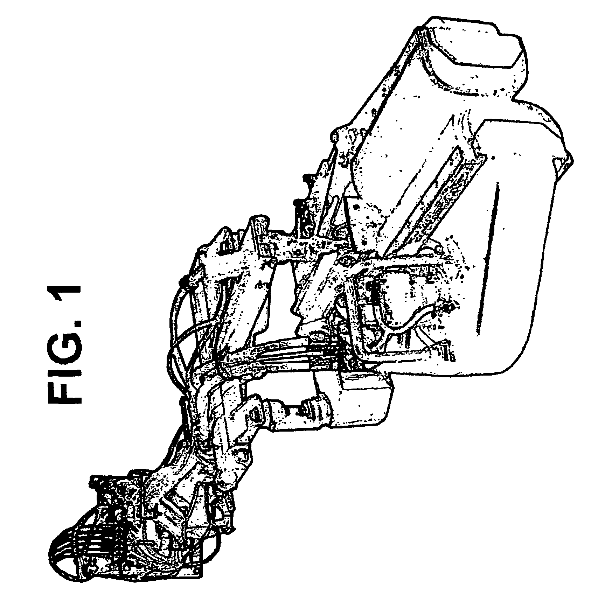

As shown in figure 1, the preferred practical embodiment of the multidirectional vibrating clamp is composed of two parts or jaws that are articulated with gears at one of their ends, that have a scissor effect, attached to the base support at the opposite ends to the gears, facilitating the realisation of a radial approaching movement between them by the activation of a hydraulic cylinder that is joined at one of its ends to the jaw, and at the other, where the rod projects out, to the other jaw, this cylinder being integral in the central part that projects from the base arm. The hydraulic motor, fed by an external hydraulic station within the tractor arrangement, is situated on one of the jaws of the clamp, this hydraulic motor having in its interior a system that facilitates the vibratory movement of the clamp, obtaining said vibration by action of the rotating movement of the inertial mass located on one extension of the eccentric rotation axis. The vibrating clamp arrangement with the elastic damper support and salient blade, which attaches it to a means of traction, normally a tractor or similar vehicle, is shown in the perspective of figure 1.

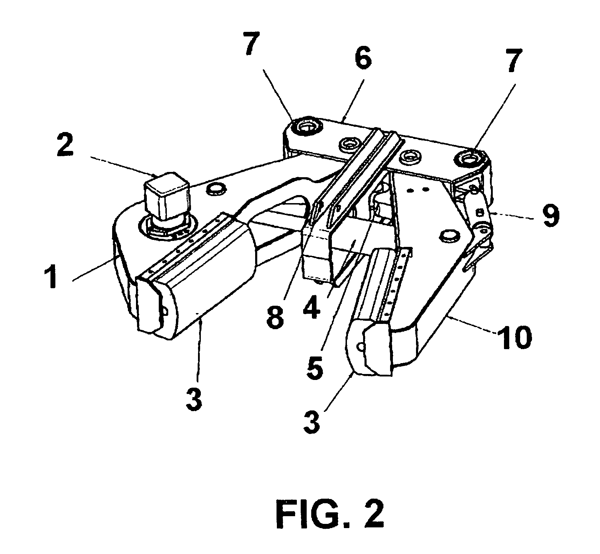

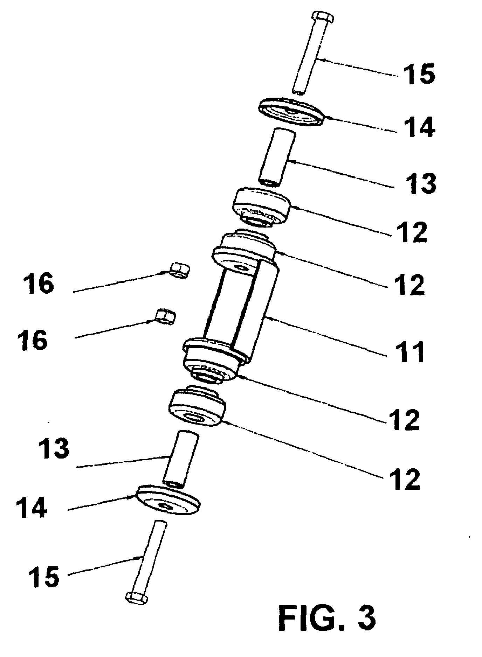

The structure of the multidirectional vibrating clamp consists of the vibrating clamp arrangement, as shown in figure 2, the main elements of which are: the jaw (1) or right side section of the clamp, where the hydraulic motor (2) is located, which transmits the movement of the inertial mass, on the inside of the salient part of this jaw is the block of rubber (3) for protecting the tree trunk or branch during vibration, in the jaw (10) or left side section and in the interior of its salient end is the rubber block (3) used for the same function as the right jaw. Between the two jaws is the hydraulic cylinder (4) that opens and closes the clamp. In the jaw of the left arm (10) is the cylinder (9) that is joined at one end to the support piece (6), and at the other to the jaw itself. The two jaws of the clamp that are joined and fixed by the support piece (6) include a protrusion with boreholes (8) for the anchoring of the support. The jaws include gears at their ends (5) that facilitate the synchronisation of the opening and closing of both sides of the clamp, situated within the support piece (6). The boreholes (7) in the support piece (6) are designed to anchor the elastic damper support (as shown in figure 3) and join the clamp arrangement onto the arm that connects to the tractor.

In figure 3, the elastic damper support that attaches to the rigid support at one of its ends and to the vibrating clamp at the other is shown, its configuration being that which is made by attaching the screw (15) through the metallic washers (14), the separating tubes (13), the elastic wheels (12), to the central support (11), which is open to provide easy access to the nuts (16) and carry out the assembly operation of this arrangement rapidly when setting up the vibrating clamp.

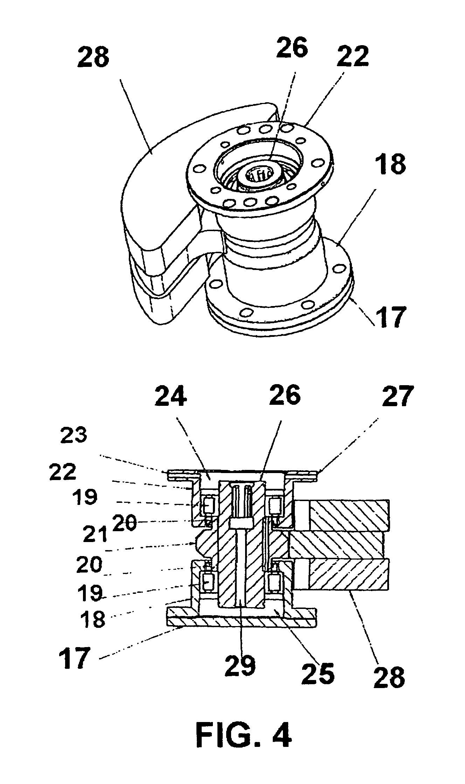

Another one of the main elements of the clamp is the vibrating mass arrangement (as shown in figure 4), where the inertial mass (28) is represented, the axis (26) that holds the motor together, as well as the bearings (19), the retainers (20), the bearing support (18) and the upper bearing support (22), as well as the eccentric mass bushing (21) of the arrangement. For the oiling system the drainage oil from the same motor is used, although reduced so that it functions as a system oiler, for which two oil (entrance-exits) have been made, (23) and (27), (as shown in the section of figure 4), which lead firstly to an upper chamber (24), which oils all the upper parts of the system, bearings, retainers, etc. Once this chamber is full, the overspill oil is sent through a hole (29) in the central axis (26) to a second, lower oiling chamber (25), which as the previous one, carries out lubrication of all the working parts, bearings, retainers, etc. As these chambers have a constant filling pressure, we avoid part failure due to lack of oiling, since while working there is always consumption and loss of this liquid.

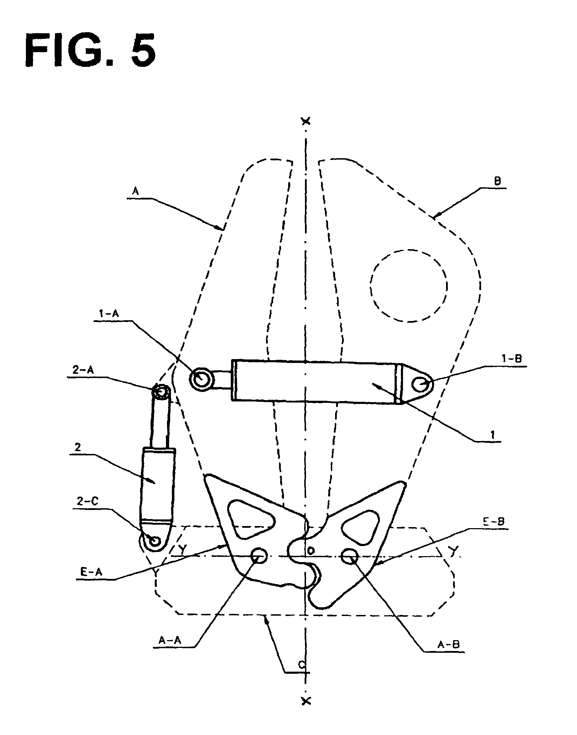

In figure 5 the parts that make up the gears that facilitate opening and closing the jaws by symmetrical movement, which have a scissor effect, lodged in the base support, and which move radially.

These gears are composed of the parts E-A and E-B and guided by the cylinders A-A and A-B, which are integral to the clamps or jaws A and B.

Parts E-A and E-B carry out rotational movement over the jaws with respect to the axis X-X, separating and joining together again with the opening and closing of the jaws, once commanded by the vibrating clamp. The jaws are held by a positioning cylinder (1), where the ends of the jaws are attached, being the support of the cylinder (1) that which is situated in the jaw (B) through bolt (1-B) and at the other end of the cylinder jaw (A) through bolt (1-A).

The rotational movements are symmetrical as a consequence of parts (E-A) and (E-B), which make up the gears, facilitating equal, angular movement at all working times, being symmetrical relative positions of the jaws with respect to the turning axis X-X, this being perpendicular at its mid-point (O) of the axis Y-Y that joins the centres of the cylinders (A-A) and (A-B).

The support cylinder (2) is situated independent from the gear system on jaw (A), where one of its ends is attached, through bolt (2-A), the other end attached to part (C), through bolt (2-C).

This cylinder acts by eliminating any slack between parts (E-A) and (E-B) of the gear arrangement and maintaining constant contact between both parts, so that any banging between them, and noise as a consequence, is eliminated.

The support cylinder can be located in each of the jaws, simultaneously, or indifferently in either one of them.

Having sufficiently described the nature of the present invention as well as a method for putting it into practice, we only need add that changes in form, materials and disposition can be made to its totality and the parts that it is composed of, as long as said changes do not substantially alter the characteristics of the invention as claimed below.

## Claims

1. A multidirectional vibrating clamp of the type attachable to a tractor or similar vehicle, equipped to pressingly clasp tree trunks or branches and submit them to vibration in any direction, for shaking off fruits to be harvested, preferably olives, almonds and other similar fruits, comprising a support piece (6) having a protrusion with boreholes (8) and two boreholes (7) for anchoring and joining the support piece (6) to a tractor by means of, respectively, screws and elastic damper supports; a right jaw (1) and a left jaw (10) both connected in articulated form through spaced apart shafts to the support piece (6), each one including at their free ends, which are capable of carrying out a radial approaching movement, respective rubber blocks (3) at their inside sides, the right jaw (1) further including a hydraulic motor axially coupled to an eccentric inertial mass assembly; and a hydraulic cylinder (4) having each one of its ends attached to one of the jaws (1,10) for moving radially the free ends of the jaws (1,10) with respect to each other; wherein the left jaw (10) is further connected to the support piece (6) by means of a support hydraulic cylinder (9) which exerts a force between the left jaw (10) and the support piece (6),
**characterised in that**
the jaws (1,10) are provided at their ends connected to the support piece (6) with respective gears (5) which rotate jointly with their respective jaws (1,10) around spaced apart shafts and engaging one gear to another in a fixed way, thus causing opening or closing of both jaws (1, 10) with a symmetrical movement relative to an axis X-X perpendicular to the support piece (6) and passing through midpoint of the segment defined by centres of the spaced apart shafts, said gears (5) maintaining a constant contact between than to eliminate noise produced by them when the clamp is vibrating because of the force exerted by the support hydraulic cylinder (9); and
an oiling system of the vibrating mass which is carried out with drainage oil from the hydraulic motor (2) for which two oil entrance-exits (23, 27) are made which lead to an upper chamber (24) that carries out oiling of all the upper parts of the system including bearings and retainers and which, once the chamber (24) is full, sends the oil overspill through a hole (29) made in a central axis (26) to a second, lower oiling chamber (25) at constant fill pressure which carries out oiling of working parts.

2. The multidirectional vibrating clamp according to Claim 1, **characterised in that** the support hydraulic cylinder (9) can be alternatively or additionally provided on the right jaw (1) of the vibrating clamp.

3. The multidirectional vibrating clamp according to Claim 1, **characterised in that** the anchoring between the tractor and the vibrating clamp has a cylinder-shaped support sectioned lengthwise (11) thus facilitating action on the fastening screws (16), both in assembly and disassembly, without acting on the whole of the system.

4. The multidirectional vibrating clamp according to Claim 1, **characterised in that** has been designed to be able of clasping tree trunks of diameters up to 350 mm with 70 horsepower tractors and up to 500 mm with 100 horsepower tractors.

## Patentansprüche

1. Eine multidirektionale Schwingkralle, wie jene, die man üblicherweise an Traktoren oder ähnlichen Fahrzeugen antrifft, welche so ausgestattet ist, dass diese Baumstämme oder -äste aufgreifen und in alle Richtungen zum Vibrieren bringen kann, sodass das Erntegut, vorzugsweise Oliven, Mandeln oder ähnliche Früchte, heruntergeschüttelt wird, bestehend aus einer Halterung (6) mit einem Vorsprung, der mit Bohrungen (8) sowie zwei weiteren Bohrungen (7) versehen ist, welche dazu dienen, die Halterung (6) mithilfe von Schrauben beziehungsweise elastischen Dämpferhalterungen am Traktor zu befestigen und an diesem zu verankern; einer rechten Backe (1) und einer linken Backe (2), welche beide in Gelenkform unter Verwendung von in einem bestimmten Abstand positionierten Wellen an der Halterung (6) befestigt sind, wobei beide Backen an den Innenseiten der freien Enden, die eine radiale Annäherungsbewegung ausführen können, mit jeweils einem Gummiklotz (3) versehen sind und die rechte Backe (1) darüber hinaus mit einem Hydraulikmotor ausgestattet ist, welcher axial an eine träge Masse in Form einer exzentrischen Baugruppe gekoppelt ist; sowie einem hydraulischen Zylinder (4), dessen Enden an jeweils einer der Backen (1,10) befestigt sind, damit sich die freien Enden der Backen (1,10) in zentrischer Hinsicht zueinander bewegen können; wobei die linke Backe (10) darüber hinaus mithilfe von einem hydraulischen Stützzylinder (9), welcher eine bestimmte Kraft ausübt und demzufolge die linke Backe (10) und die Halterung (6) auseinander drückt, mit der Halterung (6) verbunden ist,
**dadurch gekennzeichnet, dass**
die Backen (1,10) an den jeweiligen mit der Halterung (6) verbundenen Enden mit Zahnrädern (5) versehen sind, welche sich in Zusammenspiel mit den jeweiligen Backen (1,10) um in einem bestimmten Abstand positionierte Wellen drehen, wobei diese Zahnräder auf eine festgelegte Art und Weise ineinander einrasten und somit das Öffnen oder Schließen beider Backen (1,10) mit einer symmetrischen Bewegung hervorrufen, welche in Bezug auf eine X-X Achse abläuft, die sich senkrecht zur Halterung (6) befindet, wobei diese gleichzeitig den Halbierungspunkt jenes Segments passieren, das durch den jeweiligen Mittelpunkt der in einem bestimmten Abstand positionierten Wellen definiert ist, und sich die besagten Zahnräder (5) in ständigem Kontakt zueinander befinden, wodurch jener seitens der Zahnräder verursachte Lärm unterdrückt wird, welcher dann entsteht, wenn die Kralle infolge der seitens der hydraulischen Stützzylinders (9) ausgeübten Kraft in Schwingung versetzt wird; und die besagten Backen (1,10) zudem mit einem Schmiersystem für die schwingende Masse ausgestattet sind, wobei diese Schmierung unter Nutzung des Dränageöls des Hydraulikmotors (2) von statten geht, zu welchem Zweck zwei Ölab- und zuläufe (23,27) vorgesehen sind, welche zu einer oberen Kammer (24) führen, die für die Schmierung aller oberen Bestandteile des Systems, einschließlich aller Lager und Sprengringe, zuständig ist, und welche, sobald die Kammer (24) voll ist, das überschüssige Öl durch eine Öffnung (29) auf einer Zentralachse (26) in eine zweite, weiter unten befindliche Schmierkammer (25) mit konstantem Fülldruck weiterleitet, welche die Schmierung der arbeitenden Teile durchführt.

2. Eine multidirektionale Schwingkralle nach Anspruch 1, **dadurch gekennzeichnet, dass** auch die rechte Backe (1) der Schwingkralle alternativ oder zusätzlich mit einem hydraulischen Stützzylinder (9) ausgerüstet werden kann.

3. Eine multidirektionale Schwingkralle nach Anspruch 1, **dadurch gekennzeichnet, dass** die Verankerung, mittels welcher die Schwingkralle am Traktor befestigt wird, mit einem zylinderförmigen Träger versehen ist, welcher in Längsrichtung unterteilt ist (11), wodurch die Handhabung der Befestigungsschrauben (16) sowohl beim Festschrauben als auch beim Lösen derselben erleichtert und somit nicht das komplette System beansprucht wird.

4. Eine multidirektionale Schwingkralle nach Anspruch 1, **dadurch gekennzeichnet, dass** diese für das Greifen von Baumstämmen mit einem Durchmesser von bis zu 350mm (in Kombination mit einem 70PS Traktor) beziehungsweise bis zu 500mm (in Kombination mit einem 100PS Traktor) entworfen wurde.

## Revendications

1. Collier multidirectionnel qui vibre du type attaché à un tracteur ou véhicule similaire, équipé pour attraper d'une manière pressante les troncs des arbres ou leurs branches et les soumettre à une vibration dans toutes les directions, en secouant les fruits à l'objet d'être récoltés, de préférence des olives, des amandes et d'autres fruits pareils, comprenant un support (6) comportant une saillie trouée (8) et deux trous (7) qui fixent et relient le support (6) au tracteur à travers leurs respectifs vis et supports amortisseurs élastiques ; une mâchoire droite (1) et une mâchoire gauche (10) étant liées entre elles d'une façon articulée, à travers des verges séparées à l'écart, au support (6), comprenant chacune dans leurs extrémités libres, qui sont capables de réaliser un mouvement radial d'approximation, des blocs en caoutchouc (3) dans leurs parties intérieures, la mâchoire droite (1) comprenant également un moteur hydraulique autour d'un axe porté par l'ensemble d'une masse d'inertie excentrique ; et un cylindre hydraulique (4) comportant chacune de leur extrémités liées à une des mâchoires (1,10) en faisant déplacer radialement les extrémités libres des mâchoires (1,10) par rapport l'une de l'autre ; où la mâchoire gauche (10) en plus, est liée au support (6) par un support cylindrique hydraulique (9) exerçant une force entre la mâchoire gauche (10) et le support (6).
**Caractérisé en ce que** les mâchoires (1,10) comportent dans leurs extrémités liées au support (6) avec les correspondants pignons dentés (5), solidaires en rotation de leurs respectives mâchoires, (1,10) autour des verges séparées à l'écart et destinées à engrener un pignon avec l'autre dans un sens fixe, en faisant déclencher ainsi, l'ouverture ou la fermeture des deux mâchoires (1,10) avec un mouvement symétrique relative par rapport à l'axe X-X perpendiculaire au support (6) et passant par la moitié du segment défini par les centres de verges séparées à l'écart et préservant, les pignons mentionnés (5), un contact constant entre eux, à l'objet d'éliminer le bruit qu'ils produisent quand le collier est en vibration par la force qui exerce le support cylindrique hydraulique (9) et un système de lubrification de la masse qui vibre est mis en marche par drainage de l'huile émanant du moteur hydraulique (2), à cet effet deux sorties-entrées d'huile (23,27) sont construites en plomb donnant sur un réservoir supérieur (24) qui lubrifie toutes les parties supérieures du système, inclus les coussinets et les « RETAINERS » et, une fois le réservoir est plein, il envoie l'excédent d'huile à travers un orifice (29) fait dans l'axe central (26), vers un deuxième réservoir plus bas (25), qui conduit l'huile, dans une pression constante de remplissage, vers les parties opérationnelles.

2. Collier multidirectionnel qui vibre selon la revendication 1, **caractérisé en ce que** le support hydraulique cylindrique (2) peut être, à tour de rôle ou de manière additionnelle, ménagé dans la mâchoire droite (1) du collier qui vibre.

3. Collier multidirectionnel qui vibre selon la revendication 1, **caractérisé en ce que** la fixation entre le tracteur et le collier qui vibre, contient un support sous forme de cylindre sectionné en long (11) afin de faciliter l'action de serrer les vis (16) aussi bien dans le montage que dans le démontage, sans activer tout le système.

4. Collier multidirectionnel qui vibre selon la revendication 1, **caractérisé en ce qu'**il a été désigné pour être capable d'attraper les troncs des arbres de plus de 350 mm. de diamètre avec des tracteurs d'une puissance de 70 chevaux et ceux de plus de 500 mm. avec des tracteurs d'une puissance de 100 chevaux.
